# EUROPÄISCHE PATENTSCHRIFT

(11) **EP 2 403 672 B1**
(45) Veröffentlichungstag und Bekanntmachung des Hinweises auf die Patenterteilung: **12.03.2014**
(21) Anmeldenummer: 10701807.9
(22) Anmeldetag: 14.01.2010
(51) Int. Cl.: B23B 39/14, B23B 49/00, B23Q 9/00, B23Q 17/22, G05B 19/402, B23Q 17/24

(54) **BEARBEITUNGSEINRICHTUNG UND VERFAHREN ZUR GEWÄHRLEISTUNG EINER VORBESTIMMTEN ÜBERARBEITUNGSTIEFE**
MACHINING DEVICE AND METHOD FOR ENSURING A PREDETERMINED MACHINING DEPTH
DISPOSITIF D'USINAGE ET PROCÉDÉ POUR GARANTIR UNE PROFONDEUR D'USINAGE PRÉDÉFINIE

(30) Priorität: 06.03.2009 DE 102009012154
(43) Veröffentlichungstag der Anmeldung: 11.01.2012
(73) Patentinhaber: ThyssenKrupp System Engineering GmbH, 74076 Heilbronn (DE)
(72) Erfinder: CORNELIUS, Peter, 54317 Kasel (DE); EISNER, Matthias, 56850 Enkirchen (DE); HAHN, Thomas, 66620 Nonnweiler-Kastel (DE); KAISER, Stefan, 66687 Wadrill (DE); KASPER, Helmut, 66687 Wadern (DE); KLINK, Artur, 66113 Saarbrücken (DE); KLOS, Michael, 66606 St. Wendel (DE); OLAINECK, Christoph, 54290 Trier (DE); SCHULTZ, Michael, 66571 Eppelborn (DE)
(74) Vertreter: Patentabteilung ThyssenKrupp AG
(86) Internationale Anmeldenummer: PCT/EP2010/000145
(87) Internationale Veröffentlichungsnummer: WO 2010/099845

(56) Entgegenhaltungen:
- EP-A1- 1 329 270
- EP-A2- 1 586 414
- EP-A2- 1 884 313
- WO-A1-03/018251
- US-A- 5 848 859
- US-A1- 2005 147 477
- BLUM A: "AKTORISCHES WERKZEUG UND MESSKOPF IM DUETT" WERKSTATT UND BETRIEB, CARL HANSER VERLAG, MUNCHEN, DE, Bd. 137, Nr. 5, 1. Mai 2004 (2004-05-01), Seiten 14-16, XP001200797 ISSN: 0043-2792
- REISER W: "JETZT AUCH DREHWERKZEUGE PER LASER VERMESSEN" WERKSTATT UND BETRIEB, CARL HANSER VERLAG, MUNCHEN, DE, Bd. 138, Nr. 4, 1. April 2005 (2005-04-01) , Seiten 21-23, XP001226355 ISSN: 0043-2792

## Beschreibung

Die Erfindung betrifft eine Bearbeitungseinrichtung zur Bearbeitung eines Werkstücks (insbesondere eines in einer Trageinrichtung wie einem Spannrahmen oder dergleichen für die Dauer einer Bearbeitung fixierten Werkstücks). Mit Vorteil ist die Bearbeitungseinrichtung als an einem Roboterarm anordenbare zumindest teilautomatisierte Bohreinrichtung ausgebildet, die mit ihrem Bohrwerkzeug (automatisiert) zu einem Flächenpunkt auf der zu bearbeitenden Werkstückfläche orthogonal ausrichtbar ist, um z.B. Löcher bohren zu können deren Bohrachse mit der Flächennormalen im Bohrlochmittelpunkt auf der Bearbeitungsfläche zusammenfällt (Bohren orthogonaler Löcher). Hierfür weist die Bearbeitungseinrichtung kopfseitig eine über eine Lagereinrichtung (in allen Kipppunkten 360° um die Drehachse des Bearbeitungswerkzeugs herum) freibeweglich gelagerte Andrückplatte (Druckplatte) auf. Über eine Messeinrichtung wird eine beim Andrücken der Druckplatte an die zu bearbeitende Werkstückoberfläche auftretende Ausrichtung/Positionsänderung der Druckplatte - ausgehend von einer Zentralposition in der die als Flächennormale der Druckplatte verlaufende Zentralachse einer Durchtrittsöffnung der Druckplatte und die Drehachse des Bearbeitungswerkzeugs zusammenfallen - erfasst.

Eine derartige Vorrichtung ist bereits aus der Patentschrift US 5,848,859 bekannt. In dieser Druckschrift wird ein Bohrwerkzeug beschrieben, welches ebenfalls eine in einem Bohrmaschinengehäuse gelagerte Bohrmaschine aufweist, an deren kopfseitigen Ende ein freibeweglicher Andrückfuß ausgebildet ist, welcher lagerseitig eine im Querschnitt gesehen kreissegmentförmige (sphärische) Lagerfläche aufweist, die mit einer hiermit korrespondierenden (sphärischen) Fläche im Bohrmaschinengehäuse zusammenwirkt. Hierbei ist der Andruckfuß über einzelne Haltefedern gegenüber dem Bohrmaschinengehäuse vorgespannt und in einer definierten Ausgangsposition gehalten. Ein Verkippen des Andruckfußes - z. B. hervorgerufen durch das Aufsetzen des Bohrfußes auf eine Werkstückfläche, die nicht orthogonal zur Bohrachse positioniert ist - wird durch eine Mehrzahl von seitlich angeordneten linearen Wegmessaufnehmern detektiert, sodass bei einer Verkippung des Andruckfußes eine Steuereinrichtung für einen die Bohreinrichtung tragenden Roboterarm, eine Steuerung/Bewegung desselben veranlasst derart, dass eine orthogonale Ausrichtung des Bohrwerkzeuges zu der zu bohrenden Fläche erreicht wird. Sobald die Bohrmaschine die gewünschte orthogonale Bohrposition im Bohrpunkt des Werkstückes erreicht hat, wird die Bohrmaschine über eine ihr zugeordnete Vorschubeinrichtung bewegt um eine entsprechende Bohrung durchzuführen.

Ausgehend von dieser Patentschrift liegt die Aufgabe zu Grunde, eine gattungsgemäße Bearbeitungseinrichtung anzugeben, die im Hinblick auf die Einhaltung vorgegebener Bearbeitungstiefen in dem zu bearbeitenden Werkstück verbessert ist. Insbesondere soll die Dosierung des Anpressdrucks, mit welchem die Druckplatte gegen eine zu bearbeitende Werkstückfläche gedrückt werden soll, verbessert werden. Hierdurch soll insbesondere bei zu bearbeitenden Werkstücken, die von ihrer Rückseite her nicht unmittelbar gegen eine Arbeitsfläche abgestützt sind, eine verbesserte Bearbeitung erreicht werden. Soll beispielsweise eine Tragfflächenbeplankung, die von ihrer Rückseite gegen eine Tragflächenrippe eines inneren Tragflächengerüsts abgestützt ist, bearbeitet werden - etwa derart, dass sowohl die Tragflächenbeplankung als auch die dahinterliegende Tragflächenrippe in einem vorbestimmten Bearbeitungspunkt durchbohrt und anschließend ggf. per Nietverbindung miteinander verbunden werden sollen - ist es hilfreich über einen definierten Anpressdruck ein aneinander Anliegen der beiden zu durchbohrenden Werkstückteile zu gewährleisten.

Aus EP 1884313 ist eine Vorrichtung gemäß dem Oberbegriff des Anspruchs 1 bekannt.

Gemäß dieser Offenbarung wird vorgeschlagen, neben einer Vorschubeinrichtung zum Antrieb der Bearbeitungseinheit entlang der Bohrachse, die Druckplatte nebst ihrer Lagereinrichtung in einer baulichen Einheit (Andrückeinheit) zusammenzufassen und diese Einheit über eine weitere lineare Antriebseinrichtung entlang der Bohrachse beweglich auszugestalten. Dabei ist die Antriebseinrichtung der Andrückeinheit relativ zur und unabhängig von der Vorschubeinrichtung bzw. von der durch die Vorschubeinrichtung verfahrbaren Bearbeitungseinheit axial verfahrbar ausgeführt. Aufgrund dieser zwei voneinander entkoppelten Antriebseinrichtungen, kann die axiale Positionierung des Bohrwerkzeugs noch genauer ausgeführt werden. Als lineare Antriebseinrichtung für die Bearbeitungseinheit und/oder für die Andrückeinheit sind insbesondere hydraulisch oder pneumatisch angetriebene Präzisionsantriebe vorgesehen.

Um die Bearbeitungseinheit, welche insbesondere als Bohrmaschine ausgebildet ist, im Hinblick auf ihren Vorschub bzw. im Hinblick auf die über den Vorschub realisierte Bearbeitungstiefe im Werkstück zu kalibrieren, ist erfindungsgemäß in Anspruch 1 eine Positionserfassungseinrichtung vorgesehen. Vorteilhafte Weiterbildungen der Erfindung sind in den Unteransprüchen beschrieben. Über die Positionserfassungseinrichtung, welche mit Vorteil als Lichtschranke ausgeführt ist, kann vor jedem Bohrvorgang, insbesondere aber zumindest nach jedem Werkzeugwechsel die genaue axiale Position des Bohrwerkzeuges (insbesondere die im Ruhezustand der Bohr- bzw. Bearbeitungseinheit vorliegende Position) bestimmt werden. Hierfür wird die Bearbeitungseinheit, ausgehend von einer vorbestimmten Ruheposition, in der die Vorschubeinrichtung und die Antriebseinrichtung der Andrückeinheit sich in einer definierten Ausgangsposition befinden, in eine Kalibierposition verfahren, wobei das Erreichen dieser Kalibrierposition über die relativ zur Vorschubeinrichtung ortsfest angeordnete Positionserfassungseinrichtung bestimmt wird. Da der axiale Abstand zwischen der ortsfest angeordneten Positionserfassungseinrichtung und der das zu bearbeitende Werkstück kontaktierenden Oberfläche der Druckplatte konstruktionsbedingt vorgegeben und damit bekannt ist, kann der zurückgelegte Verfahrweg zwischen Ruheposition und Kalibrierposition ermittelt (gemessen) werden, sodass in Abhängigkeit von dem bekannten Abstand zwischen der Positionserfassungseinrichtung und der Kontaktoberfläche der Druckplatte, sowie in Abhängigkeit von dem zurückgelegten Verfahrweg zwischen Ruheposition und Kalibrierposition, sowie unter Berücksichtigung der gewünschten Bearbeitungstiefe der erforderliche Gesamtverfahrweg (Gesamtvorschub) für die Bearbeitungseinheit in Richtung zu bearbeitendes Werkstück ermittelt werden. Dabei wird unter dem Gesamtverfahrweg insbesondere der Verfahrweg für die Bearbeitungseinheit verstanden, der ausgehend von der definierten Ruheposition bis zur Endposition in der das Bearbeitungswerkzeug, das Werkstück mit der gewünschten Bearbeitungstiefe bearbeitet hat, verstanden. Weitere Vorteile, Besonderheiten und zweckmäßige Weiterbildungen der Erfindung werden in der nachfolgenden Figurenbeschreibung erläutert.

Es zeigen:
- Fig. 1: Eine schematische Darstellung der erfindungsgemäßen Bearbeitungseinrichtung mit einer als Bohreinheit ausgebildeten Bearbeitungseinheit,
- Fig. 2: die Bearbeitungseinrichtung gemäß Fig. 1 wobei die Bearbeitungseinheit in einer ersten möglichen Ruheposition dargestellt ist,
- Fig. 3: die Bearbeitungseinrichtung gemäß Fig. 1 wobei die Bearbeitungseinheit in einer zweiten möglichen Ruheposition dargestellt ist,
- Fig. 4: die Bearbeitungseinrichtung gemäß Fig. 1 wobei diese in einem Abstand zu einem zu bearbeitenden Werkstück vorpositioniert ist, und
- Fig. 5: die ausschnittsweise Darstellung eines von der Bearbeitungseinheit getragenen Bearbeitungswerkzeugs.

Mittels der erfindungsgemäßen Bearbeitungseinrichtung bzw. anhand des erfindungsgemäßen Verfahrens zur automatisierten Bestimmung eines Gesamtverfahrwegs einer Bearbeitungseinheit zur Gewährleistung einer vorbestimmten Bearbeitungstiefe sollen insbesondere große Bauteile, wie sie im Flugzeugbau Verwendung finden, mit einem robotergeführten Bohrkopf überarbeitet werden, sodass Senkungsbohrungen mit einer Genauigkeit von +/- 15 µm in das zu bearbeitende Werkstück eingebracht werden können. Hierfür müssen Ungenauigkeiten bei der Positionierung des Roboters sowie Ungenauigkeiten in der Positionierung des zu bearbeitenden Bauteils sowie Toleranzen dieses Bauteils selbst ausgeglichen werden. Darüber hinaus müssen Chargensschwankungen von verwendeten Nieten oder dergleichen ausgeglichen werden.

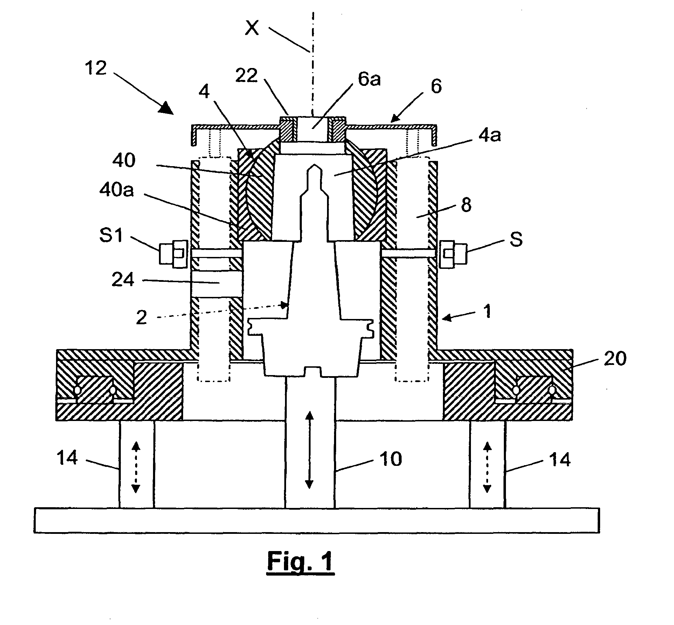

In Fig. 1 ist eine erfindungsgemäße Bearbeitungseinrichtung zur Bearbeitung eines Werkstücks dargestellt, bei der eine Bearbeitungseinheit 2 in Form einer Bohrmaschine eingesetzt ist. Dabei ist die Bohrmaschine 2 über eine Vorschubeinrichtung 10 entlang der Drehachse X (bzw. Vorschubachse) des Bearbeitungswerkzeuges 2a axial verschiebbar angeordnet/gelagert. Hierbei kann die Bearbeitungseinheit 2 über die Vorschubeinrichtung 10 relativ zu einer ortsfest angeordneten Grundplatte 18 (Grundplatte ist ortsfester Bestandteil der Bearbeitungseinrichtung 2) linear vor und zurück bewegt werden. Dabei kann die ortsfeste Grundplatte 18 als separate (senkrecht zur Vorschubachse positionierte) Platte, die an einer Befestigungsebene eines Roboterarmes befestigbar ist, ausgeführt sein. Koaxial zur Bearbeitungseinheit 2 ist eine Andrückeinheit 12 angeordnet, die auf ihrer einem zu bearbeitenden Werkstück zugekehrten Seite, eine über eine Lagereinrichtung 4 (Kugelgelenk) gelagerte Druckplatte 6 trägt, und die auf ihrer dem zu bearbeitenden Werkstück abgekehrten Seite mit einer weiteren Antriebseinrichtung 14 zusammenwirkt, derart, dass die Andrückeinheit 12 über die ihr zugeordnete Antriebseinrichtung 14 gegenüber der Bearbeitungseinheit 2 bzw. relativ zu dieser in Richtung der Drehachse X und unabhängig von der Bearbeitungseinheit 2 bzw. dem Vorschubeinrichtung 10 axial verfahrbar ist. Dabei sind zwischen der kugelgelagerten Druckplatte 6 und der Andrückeinheit 12 mehrere Messaufnehmer einer Messeinrichtung 8 angeordnet, um eine Ausrichtung/Verkippung (bzw. das Ausmaß und die Richtung der Verkippung/Ausrichtung) der Druckplatte 6 bei Andruck auf einer zu bearbeitenden Werkstückfläche zu erfassen. Die Messaufnehmer sind dabei nicht mechanisch mit der Druckplatte 6 verbunden, sondern liegen lediglich auf der Rückseite der Druckplatte 6 mit einer vorbestimmten geringen Federkraft gegen diese an. Dabei ist die Federkraft (im Verhältnis zur Masse der Druckplatte) derart bemessen, dass die Messaufnehmer zwar gegen die Druckplatte 6 anliegen, sie diese jedoch nicht zu bewegen vermögen (die Druckplatte 6 kann demnach also nicht durch die federbelasteten Messaufnehmer bewegt oder gar in eine vorbestimmte Position ausgerichtet werden). Um eine möglichst unbeeinflusste, störungsfreie und genaue Ausrichtung und Positionserfassung der Druckplatte 6 zu erreichen, ist diese im Wesentlichen kraftfrei gelagert, dergestalt, dass (außer den federbelasteten Messaufnehmern mit geringer Krafteinwirkung) keinerlei Kraftspeicher an der Druckplatte 6 angreifen - etwa um diese in einem unbelasteten Zustand in eine vorbestimmte Position, wie die Zentralposition, auszurichten bzw. in dieser zu halten. Zur Lagerung der Druckplatte 6 weist die Andrückeinheit 12 einen im Wesentlichen hohlzylindrischen Tragrahmen 16 auf, der auf seiner dem Werkstück abgekehrten Seite (bzw. der der Grundplatte 18 zugekehrten Seite) einen hutkragenartigen Fortsatz aufweist, sodass im Querschnitt gesehen, eine Doppel-L-Form - bei der die langen Schenkel des L's einander parallel gegenüberliegen und bei der die kurzen Schenkel des L's in entgegengesetzte Richtungen nach außen weisen - gebildet ist. Die Messaufnehmer 8 sind vom Tragrahmen 16 aufgenommen bzw. zumindest bereichsweise in diesen integriert. Hierdurch wird zum einen eine sehr kompakte Bauweise erreicht und werden zum anderen die Messaufnehmer 8 vor mechanischen oder anderen Einflüssen geschützt. Als weitere Schutzmaßnahme für die Messaufnehmer 8 ist eine (nicht dargestellte) Verdrehsicherung der Druckplatte 6 vorgesehen. Diese Verdrehsicherung besteht im Wesentlichen aus einer Kugel, die in einer Nut einer Seitenfläche der Druckplatte 6 läuft und die an einem Stift kleinen Durchmessers befestigt und über diesen am Tragrahmen 16 oder einem anderen relativ zur Druckplatte 6 ortsfesten Bauteil abgestützt ist.

Ferner sind an dem hohlzylindrischen Bereich des Tragrahmens 16 der Andrückeinheit 12 gegenüberliegend zwei korrespondierende Lichtschrankenelemente S1, S2 angeordnet, mittels denen die Position des Bearbeitungswerkzeuges 2a detektiert werden soll. Diese Positionsbestimmung erfolgt beispielsweise durch eine Detektierung der Spitze des Bearbeitungswerkzeuges 2a und dient insbesondere der Bestimmung einer durchzuführenden Bohr- bzw. Senktiefe im zu bearbeitenden Werkstück. Die Positionsbestimmung wird zumindest nach jedem Werkzeugwechsel zu Beginn der Inbetriebnahme einmal durchgeführt. Hierfür wird die Bearbeitungseinheit 2 mit dem von ihr getragenen Bearbeitungswerkzeug 2a ausgehend von einer in Fig. 1 dargestellten Ruheposition zurück verfahren bis die Spitze des Bearbeitungswerkzeugs 2a (z.B. Querschneide eines Spiralbohrers), den Bereich der Lichtschrankenelemente S1, S2 verlässt (Lichtschranke nicht mehr unterbrochen) und anschließend langsam soweit nach vorne gefahren wird, bis durch die Spitze des Bearbeitungswerkzeuges 2a gerade die Lichtschranke der Lichtschrankenelemente S1, S2 wieder unterbrochen wird. Auf Grund der definierten Lage (bekannter Abstand der Lichtschranke zur Stirnfläche der Druckplatte 6 oder zur Stirnfläche des Anpresselements 22 - im Folgenden auch als Leerweg bezeichnet) der Lichtschrankenelemente S1, S2 zur Stirnfläche der kugelgelagerten Druckplatte 6, kann auf einfache Weise die entsprechende Bohr- bzw. Senktiefe bestimmt werden (Bohr- bzw. Bearbeitungstiefe = Gesamtvorschubweg - Leerweg; bzw. für die gewünschte Bearbeitungstiefe erforderlicher Vorschubweg = Leerweg + gewünschte Bearbeitungstiefe).

Damit die Positionsbestimmung bzw. die relative Lage des Bearbeitungswerkzeuges 2a (definiert durch dessen Drehachse X) zur Flächennormalen N im zum bearbeitenden Punkt der Werkstückfläche genau bestimmt werden kann, ist die Druckplatte 6 derart ausgebildet, dass eine definierte Anlage der Druckplatte 6 möglichst nahe an der zu bearbeitenden Oberflächenposition erfolgt. Hierfür ist die Durchtrittsöffnung 6a der Druckplatte 6 in Anpassung an das durch diese Öffnung 6a durchzuführende Bearbeitungswerkzeug 2a dimensioniert (z.B. Durchtrittsöffnung der Druckplatte 6 bzw. des Anpresselements 22 nur geringfügig größer bemessen als der Durchmesser des Bearbeitungswerkzeugs). Mit Vorteil weist die Druckplatte 6 auf ihrer dem zu bearbeitenden Werkstück zugekehrten Seite im Bereich der Durchtrittsöffnung 6a ein Anpresselement 22 auf. Dieses Anpresselement 22 ist bevorzugt wechselbar an der Druckplatte 6 befestigt und besteht beispielsweise aus Materialien wie Teflon, Metall, Kunststoff oder einem Keramikwerkstoff. Die Auswahl des Werkstoffes für das Anpresselement 22 erfolgt in Abhängigkeit von dem Material des zu Bearbeitenden Werkstückes und/oder in Abhängigkeit von dessen Oberflächengüte. Das Anpresselement 22 kann auf seiner dem Werkstück zugekehrten Oberfläche entsprechend strukturiert sein, sodass ein Kontakt mit dem zu bearbeitenden Werkstück nur im Bereich vorbestimmter Erhebungen erfolgt. Weiterhin kann das Anpresselement 22 auch aus einzelnen Segmentteilen, insbesondere aus Segmentteilen eines Kreisringes bestehen.
Um einen möglichst komfortablen Wechsel des Bearbeitungswerkzeugs 2a (z. B. Austausch eines Bohrers gegen einen Senkbohrer oder einen Bohrer anderen Durchmessers) gewährleisten zu können, ist die Andrückeinheit 12 entsprechend ausgebildet. Hierfür kann beispielsweise der Tragrahmen 16 gegenüber seiner Antriebseinrichtung 14 oder mit seiner Antriebseinrichtung 14 quer zur Drehachse X des Bearbeitungswerkzeugs 2a über eine Schienenführung 20 verfahren werden. Alternativ hierzu ist auch denkbar, dass der Tragrahmen 16 über ein nicht dargestelltes Scharnier bzw. eine entsprechende Gelenkverbindung quer zur Drehachse X des Bearbeitungswerkzeugs 2a verschwenkbar gelagert ist.

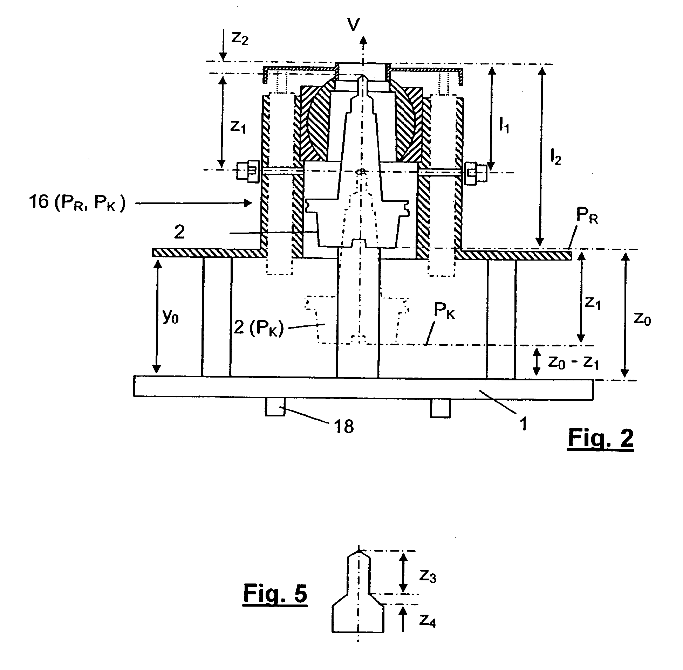

In Fig. 2 ist die erfindungsgemäße Bearbeitungseinrichtung in einer Ruheposition P_{R} dargestellt, in der sowohl die Vorschubeinrichtung 10 für den Antrieb der Bearbeitungseinrichtung 2 sowie die Antriebseinrichtung 14 zum Antrieb der Andrückeinheit 12 sich in einer definierten Ausgangsposition befinden. In der vorbestimmten Ruheposition P_{R} befindet sich die Andrückeinheit 12 mit einem definierten axialen Bezugspunkt (hier gebildet durch die kreisringförmige Fläche der Tragrahmenvorrichtung 16 bzw. den/die kurzen Schenkel der im Querschnitt gesehen doppel-L-förmigen hohlzylindrischen Tragrahmenvorrichtung 16) in einem vorbestimmten Ruheabstand y₀ zur ortsfesten Grundplatte 18 der Bearbeitungseinrichtung. Gleichzeitig befindet sich die Bearbeitungseinheit 2 mit einem definierten axialen Bezugspunkt (hier durch die endseitige Fläche der Bearbeitungseinrichtung 2 gebildet) in einem vorbestimmten Ruheabstand z₀ zur Grundplatte 18 der Bearbeitungseinrichtung. Ausgehend von dieser definierten Ruheposition P_{R}, wird die Bearbeitungseinheit 2, nebst dem von ihr getragenen Bearbeitungswerkzeug 2a über die ihr zugeordnete Antriebseinrichtung (Vorschubeinrichtung 10) in eine Kalibrierposition P_{K} verfahren. Dabei ist die Kalibrierposition P_{K} durch eine als Lichtschranke ausgeführte und in den Tragrahmen 16 integrierte Positionserfassungseinrichtung S1, S2 definiert, wobei über die Positionserfassungseinrichtung S1, S2 ein vorbestimmtes Merkmal der Bearbeitungseinrichtung 2 und/oder des Bearbeitungswerkzeuges 2a überwacht bzw. erfasst wird. Im dargestellten Ausführungsbeispiel wird hierfür über zwei Lichtschrankenelemente S1, S2 die Querschneide des als Bohrer ausgebildeten Bearbeitungswerkzeuges 2a erfasst. Hierfür wird die Bearbeitungseinheit 2 - bei stillstehender bzw. in ihrer Ruheposition verharrender Andrückeinheit 12 - ausgehend von ihrer Ruheposition, in der die Spitze des Bearbeitungswerkzeugs 2a in Vorschubrichtung gesehen hinter den Lichtschrankenelementen S1, S2 axial angeordnet ist, soweit zurück verfahren, bis die im Ruhezustand der Berarbeitungseinheit 2 unterbrochene Lichtschranke gerade wieder geschlossen ist. In einer bevorzugten Ausführungsform wird hierfür die Bearbeitungseinheit 2 mit einer ersten Verfahrgeschwindigkeit v₁ bis über die durch die Positionserfassungseinrichtung S1, S2 definierte Kalibrierposition P_{K} hinweg zurück verfahren und anschließend mit einer zweiten im Vergleich zur ersten Verfahrgeschwindigkeit v₁ geringeren Verfahrgeschwindigkeit v₂ soweit vor verfahren, bis die Kalibrierposition P_{K} gemäß Information der Positionserfassungseinrichtung S1, S2 (Lichtschranke gerade unterbrochen) erreicht ist (gestrichelte nicht gefüllte Darstellung des Bearbeitungswerkzeugs 2 in der Position z₀ - z₁). In Abhängigkeit von dem bekannten Abstand I₁ zwischen der Positionserfassungseinrichtung S1, S2 und der Kontaktoberfläche der Druckplatte 6 sowie in Abhängigkeit von dem zurückgelegten Verfahrweg zwischen der Ruheposition P_{R} und der Kalibrierposition P_{K} sowie unter Berücksichtigung der vorbestimmten gewünschten Bearbeitungstiefe BT, kann der erforderliche Gesamtverfahrweg (Gesamtvorschub) für die Bearbeitungseinheit 2 in Richtung zu bearbeitendes Werkstück ermittelt werden und somit ein hohes Maß an Genauigkeit im Hinblick auf die zu erstellende Bearbeitungstiefe BT im Werkstück gewährleistet werden.

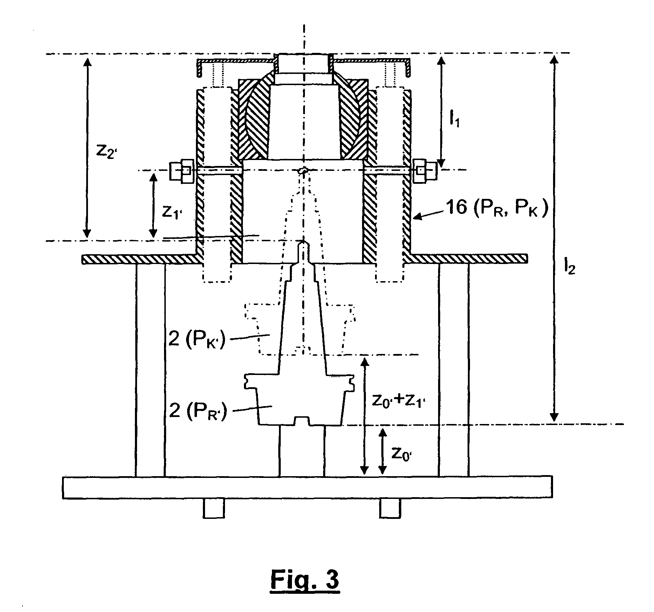

In Fig. 3 ist eine im Vergleich zu Fig. 2 veränderte Ausführungsform der Erfindung dargestellt, bei der die Bearbeitungseinheit 2 in ihrer Ruheposition P_{R}' mit der Spitze ihres Bearbeitungswerkzeuges 2a in Vorschubrichtung V gesehen vor der Positionserfassungseinrichtung S1, S2 angeordnet ist. Ausgehend von dieser Ruheposition P_{R}' kann die Positionserfassung analog zu der gemäß Fig. 2 beschriebenen Positionserfassung erfolgen, in dem die Bearbeitungseinrichtung 2 mit einer ersten Verfahrgeschwindigkeit v₁ zuerst über die Kalibrierposition P_{K} hinweg vor verfahren wird und anschließend mit einer zweiten im Vergleich zur ersten Verfahrgeschwindigkeit v₁ geringeren Verfahrgeschwindigkeit v₂ soweit zurück verfahren wird, bis die Kalibrierposition P_{K} gemäß der Information der Positionserfassungseinrichtung S1, S2 (Lichtschranke gerade wieder geschlossen) erreicht ist. Auch die Ermittlung des Gesamtverfahrwegs ergibt sich analog zu der bereits gemäß Fig. 2 beschriebenen Verfahrensweise.

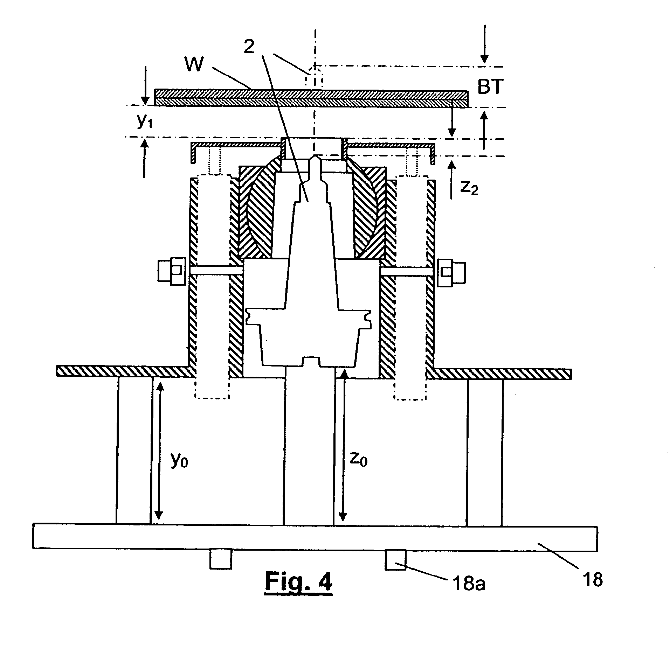

Anhand von Fig. 4, in der die erfindungsgemäße Bearbeitungseinrichtung beabstandet von einem zu bearbeitenden Werkstück W in der beschriebenen Ruheposition P_{R} dargestellt ist, soll nunmehr zusammenfassend das erfindungsgemäße Verfahren beschrieben werden. In der dargestellten Bearbeitungsposition ist die erfindungsgemäße Bearbeitungseinrichtung die über die an der Grundplatte 18 ausgeführten Befestigungsmittel 18a an einem Roboterarm eines nicht dargestellten Industrieroboters gehalten ist, in einem axialen Abstand Y₁ (Abstand zwischen Kontaktoberfläche der Druckplatte 6 und der Oberfläche eines zu bearbeitenden Werkstückes W) dargestellt. Das zu bearbeitende Werkstück W besteht beispielsweise aus zwei vorpositionierten miteinander dauerhaft zu verbindenden plattenartigen Werkstückteilen eines großflächigen Bauteils, wie einer Flugzeugtragfläche oder dergleichen. Aus der dargestellten Bearbeitungsposition in der die erfindungsgemäße Bearbeitungseinrichtung über einen Roboter bereits in eine vorbestimmte Position im Hinblick auf das zu bearbeitende Werkstück W geführt worden ist, wird nunmehr die Andrückeinheit 12 über die ihr zugeordnete Antriebseinrichtung 14 soweit in Vorschubrichtung V vor verfahren, bis die Druckplatte 6 mit ihrer Kontaktoberfläche an der zu bearbeitenden Oberfläche des Werkstückes W mit einer vorbestimmten Anpresskraft anliegt. Zur Ermittlung der entsprechenden Andrückkräfte ist die Bearbeitungseinrichtung mit nicht dargestellten Kraftaufnehmern ausgestattet. Da nunmehr die Antriebseinrichtung 14 der Andrückeinheit 12 - und damit auch die Andrückeinheit 12 selbst - sich nicht mehr in einer per Ruheposition P_{R} definierten Ausgangsposition befinden, sondern diese sich um den Abstand y₁ (Abstand zwischen Druckplattenoberfläche und-Werkstückoberfläche = Vorschubverfahrweg der Antriebseinrichtung 14) geändert hat, ist auch die relative Lage des innerhalb der Andrückeinheit 12 angeordneten Bearbeitungseinheit 2 entsprechend verändert. Da aber aus den vorstehend beschriebenen Kalibriervorgängen die ursprüngliche Position des Bearbeitungswerkzeugs 2a innerhalb der Andrückeinheit 12 bekannt ist, ist für den zu verfahrenen Gesamtweg lediglich der zusätzliche Vorschubweg y₁ zu berücksichtigen, sodass die Bohreinheit 2 nunmehr um einen Gesamtverfahrweg z gesamt = z₀ + z₂ + y₁ + gewünschte Bohrtiefe (BT) verfahren werden. Dabei bestimmen sich z₀ als bekannter Abstand der Bearbeitungseinheit 2 zur Grundplatte 18 in der Ruheposition; y₁ als ermittelter Verfahrweg der Andrückeinheit 12 in Vorschubrichtung durch das Verfahren derselben in Vorschubrichtung bis zur Anlage der Druckplatte 6 an die Oberfläche des Werkstücks W; sowie z₂ als bekannter Abstand der Spitze des Bearbeitungswerkzeuges 2a bis zur Kontaktoberfläche der Druckplatte 6; sowie BT als vorgegebener Wert für eine gewünschte Bearbeitungstiefe (z. B. Bohr- und/oder Senktiefe).

In Fig. 5 ist ausschnittsweise die Spitze eines als Senkbohrer ausgeführten Bearbeitungswerkzeugs 2a dargestellt. Dabei ist der Bearbeitungsweg des Bearbeitungswerkzeuges 2a in einen Bohrbearbeitungsweg mit der Länge z₃ sowie Senkbearbeitungsweg mit der Länge z₄ veranschaulicht. Durch die erfindungsgemäße Bearbeitungseinrichtung bzw. das erfindungsgemäße Verfahren können nunmehr - bei bekannter Geometrie des Bearbeitungswerkzeugs 2a sowie durch den gemäß der Erfindung ermittelten erforderlichen Gesamtverfahrweg der Bearbeitungseinheit 2 - sehr präzise Bohr- bzw. Senkbohrlöcher in Werkstücken realisiert werden.

## Patentansprüche

1. Bearbeitungseinrichtung zur Bearbeitung eines Werkstücks (W), umfassend
- eine Bearbeitungseinheit (2), in der ein rotierbar gelagertes Bearbeitungswerkzeug (2a) gehalten ist,
- eine Vorschubeinrichtung (10), über die die Bearbeitungseinheit (2) entlang der Drehachse (X) des Bearbeitungswerkzeugs (2a) axial verfahrbar ist,
- eine über eine Lagereinrichtung (4) freibeweglich gelagerte Druckplatte (6), wobei sowohl die Lagereinrichtung (4) als auch die Druckplatte (6) jeweils eine Durchtrittsöffnung (4a; 6a) für das Bearbeitungswerkzeug (2a) aufweisen,
- eine Messeinrichtung (8) zur Positionserfassung der durch Andrücken an die Werkstückoberfläche sich ausrichtenden Druckplatte (6), wobei die Druckplatte (6) und die Lagereinrichtung (4) Bestandteil einer Andrückeinheit (12) sind, und die Andrückeinheit (12) über eine ihr zugeordnete Antriebseinrichtung (14) relativ zur und unabhängig von der Bearbeitungseinheit (2) entlang der Drehachse (X) axial verfahrbar ist,
**dadurch gekennzeichnet, dass**
die Andrückeinheit (12) einen Tragrahmen (16) aufweist mit einer integrierten Positionserfassungseinrichtung (S1, S2) zur Erfassung der axialen Position des Bearbeitungswerkzeugs (2a).

2. Bearbeitungseinrichtung nach Anspruch 1, **dadurch gekennzeichnet, dass** die Messeinrichtung (8) derart ausgebildet ist, dass die Positionsabweichung der Druckplatte (6) relativ zu einer Zentralposition, in der die als Flächennormale (N) der Druckplatte (6) verlaufende zentrale Achse der Durchtrittsöffnung (6a) und die Rotationsachse (X) des Bearbeitungswerkzeugs (2a) zusammenfallen, ermittelt wird.

3. Bearbeitungseinrichtung nach Anspruch 2, **dadurch gekennzeichnet, dass** die Positionserfassungseinrichtung (S1, S2) als Lichtschranke ausgeführt ist.

4. Bearbeitungseinrichtung nach einem der vorstehenden Ansprüche, **dadurch gekennzeichnet, dass** die Positionserfassungseinrichtung (S1₁ S2) derart ausgebildet ist, dass eine positionsgenaue Erfassung der Spitze des Bearbeitungswerkzeugs (2a) und/oder einer vorbestimmten Markierung auf dem Bearbeitungswerkzeug (2a) ermöglicht ist.

5. Bearbeitungseinrichtung nach einem der vorstehenden Ansprüche, **dadurch gekennzeichnet, dass** die Lagereinrichtung (4) als Kugelgelenklager ausgeführt ist, welches einen zumindest einen Kugeloberflächenbereich aufweisenden Lagerkörper (40b) und eine den Lagerkörper (40b) an den Kugeloberflächenbereichen formschlüssig umschließende Lageraufnahme (40a) aufweist.

6. Verfahren zur automatisierten Bestimmung eines Gesamtverfahrwegs einer Bearbeitungseinheit (2) zur Gewährleistung einer vorbestimmten Bearbeitungstiefe bei einem
Werkstück, welches mittels einer gemäß einem der vorstehenden Ansprüche ausgebildeten Bearbeitungseinrichtung bearbeitet wird, umfassend folgende Verfahrensschritte:
i) ausgehend von einer vorbestimmten Ruheposition (P_{R}), in der die Vorschubeinrichtung (10) und die Antriebseinrichtung (14) der Andrückeinheit (12) sich in einer definierten Ausgangsposition befinden,
- wird die Bearbeitungseinheit (2) nebst Bearbeitungswerkzeug (2a) über die Vorschubeinrichtung (10) in eine Kalibrierposition (P_{K}) verfahren, wobei das Erreichen der Kalibrierposition (P_{K}) über eine ortsfeste Positionserfassungseinrichtung (S1, S1) mit bekanntem axialen Abstand (I₁) zu der Kontaktoberfläche der Druckplatte (6) bestimmt wird,
- und wird der zurückgelegte Verfahrweg (z₁; z₁') zwischen Ruheposition (P_{R}) und Kalibrierposition (P_{K}) ermittelt, und
ii) in Abhängigkeit von dem bekannten Abstand (I₁) sowie in Abhängigkeit von dem zurückgelegten Verfahrweg (z₁; z₁') und unter Berücksichtigung der gewünschten Bearbeitungstiefe (BT) wird der Gesamtverfahrweg für die Bearbeitungseinheit (2) in Richtung des zu bearbeitenden Werkstücks (W) ermittelt.

7. Verfahren nach Anspruch 6, **dadurch gekennzeichnet, dass** die Positionserfassungseinrichtung (S1, S2) als Lichtschranke ausgebildet ist und die Positionserfassung durch Auswertung der Lichtschrankensignale erfolgt.

8. Verfahren nach Anspruch 6 oder 7, **dadurch gekennzeichnet, dass** das Erreichen der Kalibrierposition (P_{K}) durch Detektion eines vorbestimmten Merkmals des Bearbeitungswerkzeugs (2a) erfolgt.

9. Verfahren nach Anspruch 8, **dadurch gekennzeichnet, dass** das Erreichen der Kalibrierposition (P_{K}) durch Detektion der Spitze des Bearbeitungswerkzeugs (2a) - insbesondere durch Detektion der Querschneide des als Bohrwerkzeug ausgebildeten Bearbeitungswerkzeugs (2a) - erfolgt.

10. Verfahren nach einem der vorstehenden Ansprüche 6 -9, **dadurch gekennzeichnet, dass** die Ruheposition (P_{R}) der Bearbeitungseinrichtung (2) in Vorschubrichtung (V) gesehen vor der Positionserfassungseinrichtung (S1, S2) liegt und die Bearbeitungseinrichtung (2) ausgehend von der Ruheposition (P_{R}) in Vorschubrichtung (V) verfahren wird, um die Kalibrierposition (P_{K}) zu erreichen.

11. Verfahren nach einem der vorstehenden Ansprüche 6 -10, **dadurch gekennzeichnet, dass** die Ruheposition (P_{R}) der Bearbeitungseinrichtung (2) in Vorschubrichtung (V) gesehen hinter der Positionserfassungseinrichtung (S1, S2) liegt und die Bearbeitungseinrichtung (2) ausgehend von der Ruheposition (P_{R}) entgegen der Vorschubrichtung (V) verfahren wird, um die Kalibrierposition (P_{K}) zu erreichen.

12. Verfahren nach Anspruch 11, **dadurch gekennzeichnet, dass** die Positionserfassung im Hinblick auf das Erreichen der Kalibrierposition (P_{K}) erfolgt, indem die Bearbeitungseinrichtung (2) mit einer ersten Verfahrgeschwindigkeit (v₁) zuerst über die Kalibrierposition (P_{K}) hinweg entgegen der Vorschubrichtung (V) verfahren wird, und anschließend mit einer zweiten, im Vergleich zur ersten Verfahrgeschwindigkeit (v₁) geringeren Verfahrgeschwindigkeit (v₂) soweit in Vorschubrichtung (V) verfahren wird, bis die Kalibrierposition (P_{K}) gemäß Information der Positionserfassungseinrichtung (S1, S2) erreicht ist.

## Claims

1. A machining device for machining a workpiece (W), comprising
- a machining unit (2) in which a rotatably supported machining tool (2a) is held,
- an advancing unit (10) by means of which the machining unit (2) can be axially displaced along the rotary axis (X) of the machining tool (2a),
- a pressure plate (6) freely displaceably supported by means of a bearing device (4), the bearing device (4) and the pressure plate (6) each comprising a passthrough opening (4a; 6a) for the machining tool (2a),
- a measuring device (8) for capturing the position of the pressure plate (6) aligned by pressing against the workpiece surface, the pressure plate (6) and the bearing device (4) being components of a pressing unit (12) and the pressing unit (12) being axially displaceable along the rotary axis (X) relative to and independently of the machining unit (2) by means of a drive device (14) associated therewith, **characterized in that**
the pressing unit (12) comprises a support frame (16) having an integrated position capturing device (S1, S2) for capturing the axial position of the machining tool (2a).

2. The machining device according to claim 1, **characterized in that** the measuring device (8) is implemented such that the deviation of the position of the pressure plate (6) is determined relative to a central position in which the central axis of the pass-through opening (6a) aligned as a surface normal (N) of the pressure plate (6) and the axis of the rotation (X) of the machining tool (2a) coincide.

3. The machining device according to claim 2, **characterized in that** the position capturing device (S1, S2) is implemented as an optical sensor.

4. The machining device according to any one of the preceding claims, **characterized in that** the position capturing device (S1, S2) is implemented to enable precise position capturing of the tip of the machining tool (2a) and/or a predefined marking on the machining tool (2a).

5. The machining device according to any one of the preceding claims, **characterized in that** the bearing device (4) is implemented as a ball-and-socket bearing comprising a bearing body (40b) having at least one ball surface region and a bearing socket (40a) enclosing the bearing body (40b) at the ball surface regions in a form-fit manner.

6. A method for automatically determining a total travel distance of a machining unit (2) in order to ensure a predetermined machining depth for a workpiece being machined by means of a machining device implemented according to any one of the preceding claims, comprising the following method steps:
i) starting from a predetermined rest position (P_{R}) in which the advancing unit (10) and the drive unit (14) of the pressing unit (12) are located at a defined starting position,
- the machining unit (2) including the machining tool (2a) is displaced by means of the advancing unit (10) into a calibration position (P_{K}), the arrival at the calibration position (P_{K}) being determined by means of a position capturing device (S1, S1) at a fixed location having a known axial distance (I₁) from the contact surface of the pressure plate (6),
- and the travel distance (z₁; z₁') covered between the rest position (P_{R}) and the calibration position (P_{K}) is determined, and
ii) the total distance traveled by the machining unit (2) in the direction of the workpiece (W) to be machined is determined as a function of the known distance (I₁) and as a function of the distance traveled (z₁; z₁') and considering the desired machining depth (BT).

7. The method according to claim 6, **characterized in that** the position capturing device (S1, S2) is implemented as an optical sensor and the position is captured by evaluating the optical sensor signals.

8. The method according to claim 6 or 7, **characterized in that** the calibration position (P_{K}) IS REACHED BY DETECTING A PREDETERMINED FEATURE OF THE MACHINING TOOL (2A).

9. The method according to claim 8, **characterized in that** the calibration position (P_{K}) is reached by detecting the tip of the machining tool (2a), particularly by detecting the cross-cut edge of the machining tool (2a) implemented as a boring tool.

10. The method according to any one of the preceding claims 6 - 9, **characterized in that** the rest position (P_{R}) of the machining device (2) is located in front of the position capturing device (S1, S2) as seen in the advancing direction (V) and the machining device (2) is displaced in the advancing direction (V) starting from the rest position (P_{R}) in order to reach the calibration position (P_{K}).

11. The method according to any one of the preceding claims 6 - 10, **characterized in that** the rest position (P_{R}) of the machining device (2) is located behind the position capturing device (S1, S2) as seen in the advancing direction (V) and the machining device (2) is displaced in the opposite direction to the advancing direction (V) starting from the rest position (P_{R}) in order to reach the calibration position (P_{K}).

12. The method according to claim 11, **characterized in that** the position capture takes place with respect to reaching the calibration position (P_{K}) **in that** the machining device (2) is first displaced at a first travel speed (v₁) beyond the calibration position (P_{K}) in the opposite direction to the advancing direction (V) and then displaced at a second travel speed (v₂), lower than the first travel speed (v₁), in the advancing direction (V) until the calibration position (P_{K}) is reached according to information from the position capturing device (S1, S2).

## Revendications

1. Dispositif d'usinage pour l'usinage d'une pièce à usiner (W), comportant
- une unité d'usinage (2), dans laquelle est maintenu un outil d'usinage (2a) monté de manière rotative,
- un dispositif d'avance (10), via lequel l'unité d'usinage (2) est déplaçable axialement le long de l'axe de rotation (X) de l'outil d'usinage (2a),
- une plaque de pression (6) montée de manière librement mobile sur un dispositif de palier (4), sachant que tant le dispositif de palier (4) que la plaque de pression (6) présentent respectivement une ouverture de passage (4a ; 6a) pour l'outil d'usinage (2a),
- un dispositif de mesure (8) pour la saisie de la position de la plaque de pression (6) se relevant sous l'effet de la pression contre la surface de la pièce à usiner, sachant que la plaque de pression (6) et le dispositif de palier (4) sont des parties d'une unité de pression (12), et l'unité de pression (12) est déplaçable axialement le long de l'axe de rotation (X) par rapport à l'unité d'usinage (2) et indépendamment de cette dernière via un dispositif d'entrainement (14) qui lui est attribué, **caractérisé en ce que**
l'unité de pression (12) présente un cadre-porteur (16) avec un dispositif de saisie de position intégré (S1, S2) pour la saisie de la position axiale de l'outil d'usinage (2a).

2. Dispositif d'usinage selon la revendication 1, **caractérisé en ce que** le dispositif de mesure (8) se présente sous une forme telle que l'écart de position de la plaque de pression (6) soit déterminé par rapport à une position centrale dans laquelle l'axe central de l'ouverture de passage (6a), s'étendant en tant que normale géométrique à la surface (N) de la plaque de pression (6), et l'axe de rotation (X) de l'outil d'usinage (2a), coïncident.

3. Dispositif d'usinage selon la revendication 2, **caractérisé en ce que** le dispositif de saisie de position (S1, S2) est réalisé sous la forme d'une barrière lumineuse.

4. Dispositif d'usinage selon l'une des revendications précédentes, **caractérisé en ce que** le dispositif de détection de position (S1, S2) se présente sous une forme telle qu'une saisie exacte en position de la pointe de l'outil d'usinage (2a) et/ou d'une marque prédéterminée sur l'outil d'usinage (2a) soit possible.

5. Dispositif d'usinage selon l'une des revendications précédentes, **caractérisé en ce que** le dispositif de palier (4) se présente sous la forme d'une articulation à rotule, qui comporte un corps de palier (40b) présentant au moins une région de surface sphérique et un logement de palier (40a) enserrant le corps de palier (40b) en engagement positif au niveau des régions de surface sphériques.

6. Procédé pour la détermination automatisée d'une course totale d'une unité d'usinage (2) en vue de garantir une profondeur d'usinage prédéterminée d'une pièce à usiner qui est usinée au moyen d'un dispositif d'usinage se présentant sous une forme selon l'une des revendications précédentes, comprenant les étapes de procédé suivantes :
i) à partir d'une position de repos (P_{R}) prédéterminée, dans laquelle le dispositif d'avance (10) et le dispositif d'entraînement (14) de l'unité de pression (12) se trouvent à une position de départ définie,
- l'unité d'usinage (2) avec outil d'usinage (2a) est déplacée à une position de calibrage (P_{K}) par le dispositif d'avance, sachant que l'arrivée à la position de calibrage (P_{K}) est déterminée à l'aide d'un dispositif de saisie de position stationnaire (S1, S2) avec une distance axiale connue (I₁) par rapport à la surface de contact de la plaque de pression (6),
- et la course parcourue (z₁; z₁') entre la position de repos (P_{R}) et la position de calibrage (P_{K}) est déterminée, et
ii) la course totale de l'unité d'usinage (2) dans la direction de la pièce à usiner (W) est déterminée en fonction de la distance connue (I₁) ainsi qu'en fonction de la course parcourue (z₁; z₁') et compte tenu de la profondeur d'usinage souhaitée (BT).

7. Procédé selon la revendication 6, **caractérisé en ce que** le dispositif de saisie de position (S1, S2) se présente sous la forme d'une barrière lumineuse et la saisie de la position est effectuée par évaluation des signaux de la barrière lumineuse.

8. Procédé selon la revendication 6 ou 7, **caractérisé en ce que** l'arrivée à la position de calibrage (P_{K}) intervient par détection d'une caractéristique prédéterminée de l'outil d'usinage (2a).

9. Procédé selon la revendication 8, **caractérisé en ce que** l'arrivée à la position de calibrage (P_{K}) intervient par détection de la pointe de l'outil d'usinage (2a), en particulier par détection de l'arête centrale de l'outil d'usinage (2a) se présentant sous la forme d'un outil d'alésage.

10. Procédé selon l'une des revendication 6 - 9 précédentes, **caractérisé en ce que** la position de repos (P_{R}) du dispositif d'usinage (2), vue dans le sens de l'avance (V), est située devant le dispositif de saisie de position (S1, S2) et le dispositif d'usinage (2) est déplacé dans le sens d'avance (V) à partir de la position de repos (P_{R}) pour d'atteindre la position de calibrage (P_{K}).

11. Procédé selon l'une des revendication 6 - 10 précédentes, **caractérisé en ce que** la position de repos (P_{R}) du dispositif d'usinage (2), vue dans le sens de l'avance (V), est située derrière le dispositif de saisie de position (S1, S2) et le dispositif d'usinage (2) est déplacé dans le sens opposé au sens d'avance (V) à partir de la position de repos (P_{R}) pour d'atteindre la position de calibrage (P_{K}).

12. Procédé selon la revendication 11, **caractérisé en ce que** la saisie de la position est effectuée eu égard à l'atteinte de la position de calibrage (P_{K}), en ce sens que le dispositif d'usinage (2) est d'abord déplacé à une première vitesse de déplacement (v₁) au-delà de la position de calibrage (P_{K}) et dans le sens opposé au sens d'avance (V), et, qu'ensuite, il est déplacé à une seconde vitesse de déplacement (v₂) inférieure à la première vitesse de déplacement (v₁) dans le sens d'avance (V) jusqu'à ce que la position de calibrage (P_{K}) soit atteinte selon les informations du dispositif de saisie de position (S1, S2).
